# EUROPEAN PATENT SPECIFICATION

(11) **EP 0 466 425 B1**
(45) Date of publication and mention of the grant of the patent: **20.09.1995**
(21) Application number: 91306162.8
(22) Date of filing: 08.07.1991
(51) Int. Cl.: B60S 1/34, F16G 11/04, F16C 11/04, F16C 33/08

(54) **Bearing structure of a wiper arm**
Lageranordnung an einem Wischerarm
Palier d'un bras d'essuie-glace

(30) Priority: 13.07.1990 JP 74615/90 U
(43) Date of publication of application: 15.01.1992
(73) Proprietor: MITSUBA ELECTRIC MFG. CO., LTD., Kiryu-shi Gunma (JP)
(72) Inventor: Ikezawa, Ryu, Kasakakemachi, Nitta-gun, Gunma-ken (JP); Kishi, Hironobu, Kiryu-shi, Gunma-ken (JP)
(74) Representative: Smith, Norman Ian

(56) References cited:
- GB-A- 2 113 319
- US-A- 4 767 677
- US-A- 4 932 097

## Description

### Field of the Invention

The present invention relates to a bearing structure of a wiper arm attached to an automobile or the like,

### Description of the Related Art

In this kind of wiper arm, an arm shank with a blade at its leading end is pivotally connected at the leading end of an arm support whose base end is integrally fixed to a wiper shaft, and the arm shank and the arm support are urged by a spring beyond a supporting point so that the blade abuts against a glass plane with a proper wiping force.

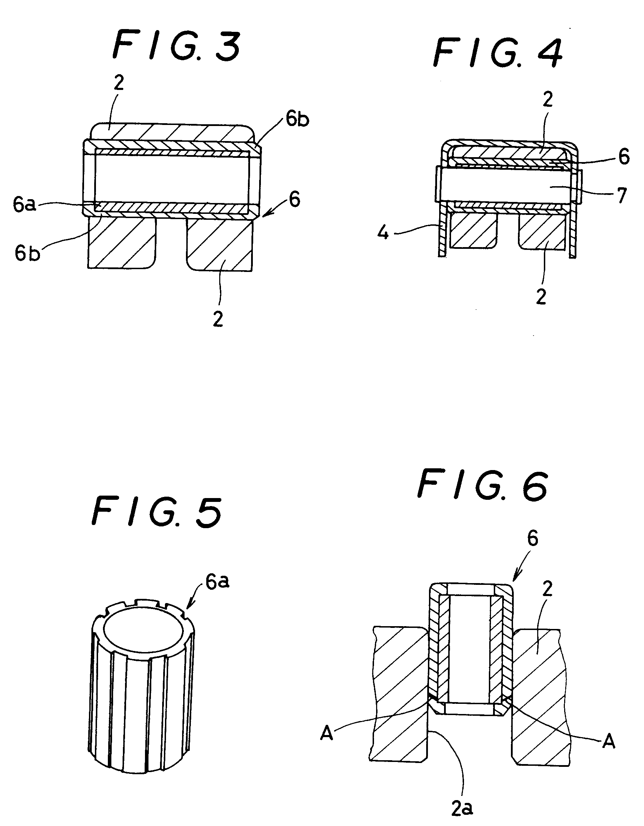

Conventionally, as shown in Fig.6, when an arm shank is pivotally connected at an arm support 2, a bushing unit 6 is provided, comprised of a bearing and a resin sleeve. The bearing may be formed by sintering and the sleeve may be insert-moulded around the bearing. The bushing unit 6 is pressed into a bearing portion of the arm support so as to prevent the arm support 2 and the bearing from being directly in contact with each other. The arm support 2 is coated beforehand, and the coating material intrudes into the bearing hole 2a, which makes it difficult to accurately control the inner diameter of the bearing hole 2a.

The whole of the outer surface of the bearing is smoothed as a result of a sizing process when the bearing is manufactured. Because of this the adhesive force of the bearing to the resin material is low. When the bushing unit 6 is pressed into the bearing hole 2a of the arm support 2, the press-in load can be heavy because of the aforementioned problem with the dimensional tolerances of the bearing hole 2a. Thus, as the bushing unit is pushed in, high stresses can be generated in the leading edge of the bushing unit and the resin material sometimes separates from the bearing, and cracks (such as A in Figure 6) can be generated, both of which lower the reliability of the wiper arm.

US-A-4,932,097 discloses a bonding unit wherein a resin sleeve insulates a sintered bearing from a wiper arm, although the sleeve is not adhered to the bearing (See e.g. column 3, lines 55 to 60 and Figure 8 of US-A-4,932,097 : "... and an intermediate member 34 ... covering the outer periphery of said oilless bearing 13"). GB-A-2,113,319 discloses a bearing for a motor which is fitted inside a thermoplastic frame, and held in place by interengaging grooves and protrusions in the resin and bearing contact surfaces.

### SUMMARY OF THE INVENTION

It is an object of the present invention to provide a bearing structure of a wiper arm capable of overcoming the problems discussed above.

In a wiper arm of the present invention of the type disclosed in US-A-4,932,097 and defined in claim 1, the leading end of an arm support fixed on the side of a wiper shaft and the base end of an arm shank with a blade are pivotally connected through a support shaft. The support shaft extends through a bushing unit comprised of a bearing and a sleeve of resin material. This bushing unit is put into place by pressing into a bearing hole bored at the leading end of the arm support. The peripheral surface of the bearing has concave portions and convex portions such that the concave portions of the peripheral surface remain rough even after the peripheral surface is processed.

This sizing process may be required to reduce the bearing maximum outside diameter by removing a layer of said convex portions. The concave portions therefore remain rough and un-processed even after the periphery of the bearing surface is processed, which processing removes excess material from the raised convex portions alone.

The peripheral surface thereby formed has both the original rough-like sections and smooth outside surface sections, strengthening the adhesive force between the resin material and the bearing relative to a conventional bearing. Therefore the formation of cracks in the resin material and separation of the resin from the bearing outer surface is prevented while the resin material is being pressed into the bearing hole.

Further developments in line with claim 1 are referred to in the dependent claims 2 to 7.

### BRIEF DESCRIPTION OF THE DRAWINGS

The drawings show an embodiment of a bearing structure of a wiper arm according to the present invention.
Fig. 1 is a vertical cross-sectional view of an arm portion of a wiper arm;
Fig. 2 is a plan view of the arm portion;
Fig. 3 is a principal enlarged cross-sectional view showing the state in which a bushing unit has been pressed into a bearing hole;
Fig. 4 is a principal enlarged cross-sectional view showing the state in which a support shaft is inserted to provide a pivot;
Fig. 5 is an enlarged perspective view of the bearing which is a component of the bushing unit; and
Fig. 6 is an explanatory view of a prior art bushing unit during pressing into the arm support.

### DESCRIPTION OF THE PREFERRED EMBODIMENT

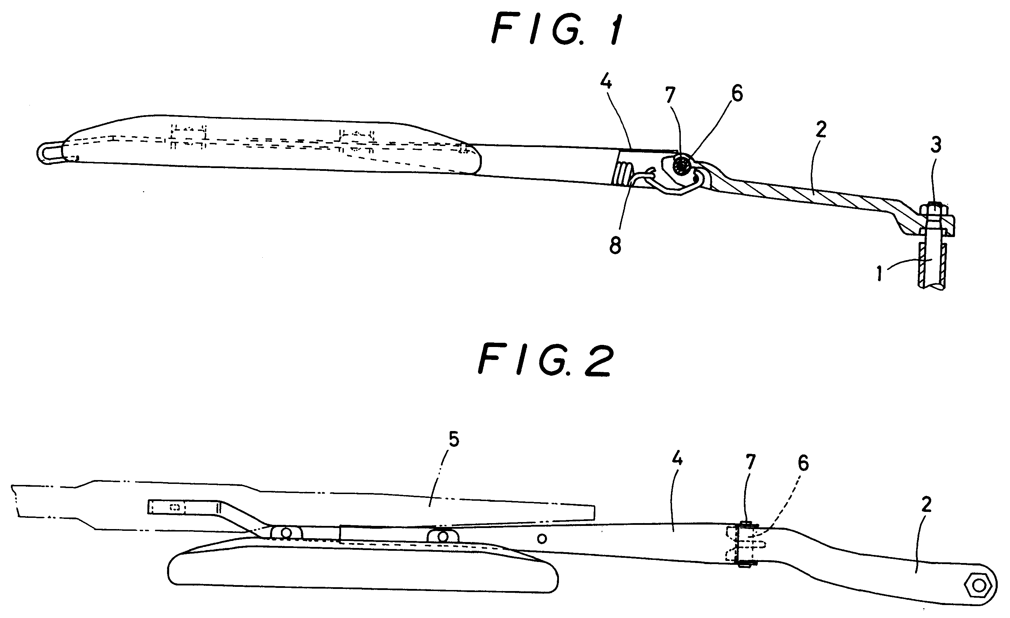

An embodiment of the present invention will be described with reference to the accompanying drawings. In Figure 1, a wiper shaft 1 is drivingly connected to a wiper motor (not shown), and the base end of an arm support 2 is mounted on the wiper shaft 1 by a nut 3. A blade 5 is attached to the leading end of an arm shank 4, and the base end of the arm shank 4 is pivotally connected to the leading end of the arm support 2.

A bearing hole 2a in Figure 6 is bored at the leading end of the arm support 2, and a bushing unit 6, described below, is pressed into said hole. The approximately inverse-U-shaped base end of the arm shank 4 is placed on the leading end of the arm support 2 from above so that the arm support 2 and the arm shank 4 are pivotally connected by a support shaft 7. A spring 8 is disposed between the arm shank 4 and a point on the arm support 2 beyond the supporting point (the axial center of the support shaft 7). This spring 8 urges the blade 5 against a glass plane during wiping.

The bushing unit 6 is comprised of a bearing 6a formed by a sintering process and a resin material 6b formed by insert molding around the bearing so as to cover the outer surface of the bearing 6a with a sleeve. The outer surface of the bearing 6a has concave portions and convex portions as shown in Figure 6. Sizing processing is carried out before insert moulding of the sleeve, and only affects the convex portions, leaving the concave portions in the rough, as-sintered state.

In the above embodiment of the present invention, when the wiper arm is assembled, the bushing unit 6 is pressed into the bearing hole 2a of the arm support 2. Strong adhesion exists between the bearing 6a and the resin material 6b both because of the rough planes of the bearing surface and the increased adhered surface area.

Thus, during assembly, even when the press-in load is increased as the bushing unit 6 is pressed into the bearing hole 2a, separation of the resin material 6b from the bearing 6a is substantially prevented, and cracking in the resin material is also substantially prevented, thereby greatly enhancing the subsequent reliability of the wiper arm in service.

## Claims

1. A wiper arm comprising a wiper shaft (1), an arm support (2) fixed on the side of said wiper shaft (1), an arm shank (4), and a blade mounted to said arm shank (4), the leading end of said arm support (2) and the base end of said arm shank (4) being pivotally connected by a support shaft (7) in a bushing unit (6) comprising a bearing (6a) through which said support shaft (7) extends and a resin or resin-like sleeve (6b), which unit (6) is mounted within a bearing hole (2a) formed in the leading end of the arm support (2), characterised in that;
a) the sleeve (6b) of resin or resin-like material is adhered to the outside of said bearing (6a); and
b) the bearing (6a) is provided with an outside surface having convex and concave portions, thereby increasing the area of adhesion between the bearing (6a) and the sleeve (6b), and
c) in that said portions have a rough-like surface, thereby promoting strong adhesion;
whereby when the bearing unit (6) is mounted by pressing into a bearing hole (2a) formed in the leading end of said arm support (2), the enhanced adhesion between the bearing (6a) and the sleeve (6b) prevents failure of the sleeve.

2. A wiper arm according to claim 1, wherein said bearing is formed by a sintering process and the rough-like surface is the as-sintered surface condition.

3. A wiper arm according to claims 1 or 2, wherein said bearing (6a) is subjected to a sizing process which reduces the bearing maximum outside diameter by removing a layer of said convex portions.

4. A wiper arm as claimed in claim 3 wherein the concave portions define rough planes on the bearing surface.

5. A wiper arm as claimed in claims 3 and 4 wherein the convex portions are the smooth outside surface defined by the bearing maximum outside diameter.

6. A wiper arm according to any preceding claim, wherein said concave and convex portions extend longitudinally of the bearing (6a).

7. A wiper arm as previously claimed wherein the resin sleeve (6b) is formed around the bearing (6a) by insert moulding, thereby producing intimate adhesive contact between said resin sleeve (6b) and said bearing (6a).

## Patentansprüche

1. Scheibenwischerarm mit einer Wischerwelle (1), einem Armträger (2) in fester Zuordnung zum einen Ende der Wischerwelle (1), einem Wischerarm (4) und einem dem Wischerarm (4) zugeordneten Wischerblatt, wobei der Armträger (2) an seinem vorderen Ende und der Wischerarm (4) an seinem hinteren Ende durch einen Tragzapfen (7) in einer Lagerhülseneinheit (6) gelenkig miteinander verbunden sind, die eine Lagerhülse (6a), durch die der Tragzapfen (7) hindurchgeführt ist und eine weitere Hülse (6b) aus einem Harz oder einem harzartigen Material einschließt, wobei die Lagerhülseneinheit (6) innerhalb einer Lageröffnung (2a) angeordnet ist, die am vorderen Ende des Armträgers (2) ausgebildet ist, dadurch gekennzeichnet, daß
a) die Hülse (6b) aus Harz oder harzartigem Material als Außenhülse der Außenseite der demzufolge inneren Lagerhülse (6a) zugeordnet ist,
b) die innere Lagerhülse (6a) mit einer Außenfläche versehen ist, die konvexe und konkave Abschnitte aufweist, um dadurch den Verbindungsbereich zwischen innerer Lagerhülse (6a) und äußerer Hülse (6b) zu vergrößern und
c) daß die vorgenannten Abschnitte die Verbindungswirkung verbessernde rauhe Oberflächen haben,
wobei nach dem Einsetzen der Lagerhülseneinheit (6) in die Lageröffnung (2a) am vorderen Ende des Armträgers unter Druck die verbesserte Verbindungswirkung zwischen innerer Lagerhülse (6a) und Außenhülse (6b) ein ungewolltes Herausrutschen der Hülse verbindet.

2. Wischerarm nach Anspruch 1, bei dem die innere Lagerhülse in einem Sinterprozeß hergestellt ist und die rauhe Oberflächenbeschaffenheit durch die Verfahrensbedingungen entsteht.

3. Wischerarm nach Anspruch 1 oder Anspruch 2, bei dem die innere Lagerhülse (6a) einem Maßanpassungsverfahren unterzogen wird, durch das der maximale Außendurchmesser der Lagerhülse verkleinert wird, indem eine Schicht der konvexen Abschnitte abgetragen wird.

4. Wischerarm wie in Anspruch 3 beansprucht, bei dem die konkaven Abschnitte rauhe Flächen auf der Verbindungsoberfläche definieren.

5. Wischerarm wie in den Ansprüchen 3 und 4 beansprucht, bei dem die konvexen Abschnitte eine glatte äußere Oberfläche aufweisen, wie sie durch den maximalen Lageraußendurchmesser definiert ist.

6. Wischerarm nach einem der vorstehenden Ansprüche, bei dem die konkaven und konvexen Abschnitte sich in der Längsrichtung der inneren Lagerhülse (6a) erstrecken.

7. Wischerarm wie vorstehend beansprucht, bei dem die Außenhülse (6b) aus Harz um die innere Lagerhülse (6a) herum durch Einsatzformen gebildet ist, wobei eine hochwirksame Verbindung zwischen der Außenhülse (6b) aus Harz und der inneren Lagerhülse (6a) ausgebildet ist.

## Revendications

1. Un bras d'essuie-glace comprenant un arbre d'essuie-glace (1), un support de bras (2) fixé sur le côté dudit arbre d'essuie-glace (1), une tige formant bras (4), et une lame montée sur ladite tige formant bras (4), l'extrémité avant dudit support de bras (2) et l'extrémité de base de ladite tige formant bras (4) étant articulées par un arbre de support (7) dans une unité formant coussinet (6) comprenant un palier (6a) à travers lequel s'étend ledit arbre de support (7) et une douille (6b) en résine ou en matière similaire à de la résine, unité (6) qui est montée à l'intérieur d'un trou de palier (2a) formé dans l'extrémité avant du support de bras (2), caractérisé en ce que
a) la douille (6b) en matière de résine ou similaire adhère à la face externe dudit palier (6a), et
b) le palier (6a) présente une surface externe ayant des parties convexes et concaves, en augmentant ainsi la surface d'adhésion entre le palier (6a) et la douille (6b), et
c) en ce que lesdites parties présentent une surface rugueuse favorisant une forte adhésion,
de sorte que, quand l'unité formant palier (6) est montée par pression dans un trou de palier (2a) ménagé dans l'extrémité avant dudit support de bras (2), l'adhésion renforçée entre le palier (6a) et la douille (6b) évite des défauts dans la douille.

2. Un bras d'essuie-glace selon la revendication 1, dans lequel ledit palier est formé par un processus de frittage et la surface rugueuse est en condition de surface à l'état fritté.

3. Un bras d'essuie-glace selon les revendications 1 ou 2, dans lequel ledit palier (6a) est soumis à un processus de dimensionnement qui réduit le diamètre externe maximum du palier en enlevant une couche desdites parties convexes.

4. Un bras d'essuie-glace comme revendiqué à la revendication 3, dans lequel les parties concaves définissent des plans rugueux sur la surface de palier.

5. Un bras d'essuie-glace comme revendiqué aux revendications 3 et 4, dans lequel les parties convexes constituent la surface externe lisse définie par le diamètre externe maximum du palier.

6. Un bras d'essuie-glace selon une quelconque des revendications précédentes, dans lequel lesdites parties concaves et convexes s'étendent le long du palier (6a).

7. Un bras d'essuie-glace comme revendiqué précédemment, dans lequel la douille (6b) en résine est formée autour du palier (6a) en étant rapportée par moulage, en réalisant ainsi un contact adhésif intime entre ladite douille (6b) en résine et ledit palier (6a).
